# EUROPEAN PATENT SPECIFICATION

(11) **EP 3 689 728 B1**
(45) Date of publication and mention of the grant of the patent: **27.07.2022**
(21) Application number: 20153143.1
(22) Date of filing: 22.01.2020
(51) Int. Cl.: B62K 15/00, B62K 21/18

(54) **FRAME FOR A FOLDING BICYCLE**
RAHMEN FÜR EIN KLAPPRAD
CADRE POUR BICYCLETTE PLIABLE

(30) Priority: 29.01.2019 GB 201901206
(43) Date of publication of application: 05.08.2020
(73) Proprietor: FLIT (Cambridge) Limited, Cambridge, Cambridgeshire CB4 2HY (GB)
(72) Inventor: Henderson, David, Cambridge, Cambridgeshire CB4 2HY (GB); Sherwood, Joseph, Cambridge, Cambridgeshire CB4 2HY (GB)
(74) Representative: Dunleavy, Christopher Squire

(56) References cited:
- WO-A1-2015/196286
- WO-A1-2016/162707
- WO-A1-2018/064763
- CN-U- 201 494 567
- CN-U- 204 432 878
- CN-Y- 2 313 830
- DE-U1-202012 002 736
- JP-A- H 115 582
- US-A1- 2018 251 185

## Description

### FIELD

Aspects of the present invention relate to a frame for a folding bicycle.

### BACKGROUND

It is known that different frames may be used for bicycles. It is also known that there are benefits to being able to fold a bicycle frame in at least one place to reduce the size of a bicycle so that it can be easily carried and/or stored etc. Bicycles can be folded in different ways, by having different mechanisms in different parts of a bicycle frame to allow the bicycle to fold. However, a folding mechanism may introduce weaknesses in the frame so the material of the frame and/or the mechanism itself may need to be formed of relatively heavy material and/or be of sturdy design to try to avoid this. Furthermore, although various frames are known which allow a bicycle to fold down into a more compact form, in many cases it would be desirable to decrease the overall size of the bicycle in its folded configuration.

Additionally, there are known systems in which a motor, e.g. an electric motor, is provided with a bicycle. The motor can be used to assist in turning at least one of the wheels of the bicycle so as to reduce, or in some cases eliminate, the effort exerted by a user of a bicycle. A bicycle employing such a system may be known as an electric bicycle. However, known motor systems and/or a power source, such as a battery, associated therewith can make the bicycle less compact when folded or may interfere with the folding of the bicycle.

It is an object of an aspect of the invention to provide a frame for a folding bicycle which can fold into a compact configuration. Additionally, or alternatively, it is an object of an aspect of the invention to provide a relatively lightweight but sufficiently strong frame for a folding bicycle.

By their nature, folding bicycles require that their frame is folded in one or more places to reduce the footprint of the bicycle for transportation or storage. Folding of a bicycle frame dictates that at least one part of a hinged frame member is folded relative to another part of said frame. When in the unfolded state, a joint allowing folding of adjacent frame parts is clamped to prevent folding. When the bicycle is to be folded, the clamp is released. When the bicycle is moved from the folded state back to the unfolded state, the clamp is again applied. This repeated clamping and unclamping of frame members and connecting hinges can cause wear to parts of the frame and/or hinges over time and necessitate replacement of a part of the frame or hinges and, in some circumstances, scrapping of the bicycle.

It is an object of an aspect of the invention to provide a wear resistant article which can reduce wear to frame members.

Folding bicycles typically have smaller wheels than conventional, i.e. road or mountain bicycles, in order to minimize footprint when in the folded state. This comes at the cost of comfort with smaller wheels giving a harsher ride. It is known to provide suspension mechanisms on bicycles. Such suspension mechanisms are typically found on the front forks, saddle and/or seat post of conventional bicycles. Furthermore, a suspension mechanism closer to the pivot point than other, prior art mechanisms (with the same bicycle geometry otherwise) would be expected to sustain a greater load than a conventional bicycle, but would deflect less. Such a system may be desirable on a folding bicycle for a variety of reasons.

It is an object of an aspect of the invention to provide a suspension mechanism suitable for a folding bicycle that is designed without seat stays, for a simplified manufacturing and assembly process.

A folding bicycle in regular use can be folded and unfolded several times a day with each folding/unfolding process requiring tightening or loosening of one or more clamps. To ensure that a clamp is fully tightened it is common for the clamp to be over tightened. Over tightening of the clamp can lead to deformation of frame members and/or connecting hinges thus causing play between frame members and/or hinge parts. When play between adjacent components develops, a bicycle can become very unpleasant to ride through noise and tactile feedback caused by undesirable movement between adjacent frame members and/or hinge parts.

It is an object of an aspect of the invention to provide a mechanism to mitigate the risk of clamps being over tightened.

Clamp failure on a folding bicycle can lead to catastrophic injury or potentially death in the case of a serious fall or accident. Known clamps are typically over engineered to minimize the risk of clamp failure. Over engineered components are costly to manufacture and would add additional weight to what might already be a heavy folding bicycle.

It is an object of an aspect of the invention to provide redundancy in the event of clamp failure.

It is also an object of aspects of the invention to provide a folding bicycle providing solutions to one or more of the aforementioned problems.

CN 201 494 567 U describes a structure of a folding bike. The structure is mainly characterized in that a slide shaft is arranged in the position of a rotating shaft of a pedal group at the lower end of the main frame; a rear wheel rack is combined on the slide shaft through a shaft sleeve and can move by taking the slide shaft as center in an arc folding and unfolding manner; and secondly, a folding mechanism is arranged in the position where a direction shaft and the main frame are combined, and another folding mechanism is arranged in the position where a front fork rack and the direction shaft are combined. By combining all the components, the folding bike can be folded at least three times.

In particular, CN 201 494 567 U does not disclose a first hinge axis as disclosed and claimed hereinafter, which is configured to be angled from a plane defined perpendicularly to a first axis when viewed from the front of the frame, the first axis being defined by a front shaft of a folding bicycle frame.

### SUMMARY

According to an aspect of the invention, there is provided a frame for a folding bicycle as defined in claim 1.

Optional features of the frame, and folding bicycles including the frame, are defined in claims 2 to 14.

### DRAWINGS

Aspects of the present invention will now be described by way of reference to the following figures.
Figure 1a shows an isometric view of a folding bicycle having a frame according to a first aspect of the invention.
Figure 1b shows a side view of a folding bicycle having a frame according to a first aspect of the invention.
Figure 2a is a side view of a first step for folding the folding bicycle of figure 1a and figure 1b.
Figure 2b is a side view of a second step for folding the folding bicycle of figure 1a and figure 1b.
Figure 2c is a side view of a third step for folding the folding bicycle of figure 1a and figure 1b.
Figure 2d is a side view of a fourth step for folding the folding bicycle of figure 1a and figure 1b.
Figure 2e is a side view of a fifth step for folding the folding bicycle of figure 1a and figure 1b.
Figure 3a is an isometric view of the first step for folding the folding bicycle of figure 1a and figure 1b.
Figure 3b is an isometric view of the second step for folding the folding bicycle of figure 1a and figure 1b.
Figure 3c is an isometric view of the third step for folding the folding bicycle of figure 1a and figure 1b.
Figure 3d is an isometric view of the fourth step for folding the folding bicycle of figure 1a and figure 1b.
Figure 3e is an isometric view of the fifth step for folding the folding bicycle of figure 1a and figure 1b.
Figure 4a is an isometric view of a suspension mechanism assembly and rear wheel carrier according to a second aspect of the invention.
Figure 4b is a side view of a suspension mechanism assembly.
Figure 4c is an exploded side view of the suspension mechanism assembly of figure 4a.
Figure 4d is an exploded isometric view of the suspension mechanism assembly of figure 4a.
Figure 5a is a side view of the front shaft and part of the steering member and steerable member of the frame illustrated in figure 1a and figure 1b.
Figure 5b is a close-up isometric view of a first hinge joint in a closed position and integrated into the steerable member of the frame illustrated in figure 1a and figure 1b, without detailing the clamp and clamp actuator
Figure 5c is a close-up side view of the first hinge joint corresponding with figure 5b and detailing the clamp and clamp actuator
Figure 5d is a close-up isometric view of the first hinge joint in the closed position and detailing the clamp and clamp actuator.
Figure 5e is a close-up side view of the first hinge joint in an open position with detailing the clamp and clamp actuator.
Figure 6a is a close-up side view of a second hinge joint in a closed position.
Figure 6b is a close-up top view of the second hinge joint in the closed position.
Figure 6c is close-up isometric view of the second hinge joint in an open position.
Figured 6d is a close-up side view of the second hinge joint corresponding with figure 6c.
Figure 6e is a front view of the second hinge joint in the closed position as applied to a folding bicycle.
Figure 6f is a view of a folding bicycle incorporating the second hinge joint and taken from above a plane angled relative to a lateral cross section through the front shaft of the folding bicycle.
Figure 6g is a close-up view of figure 6f.
Figure 7a illustrates a chain tensioner according to an aspect of the invention when a folding bicycle is in an unfolded configuration.
Figure 7b illustrates the chain tensioner of figure 7a when the frame of the folding bicycle is in a folded configuration.
Figure 8a shows a view of a first embodiment of a torque limiter for a clamp for a folding bicycle frame.
Figure 8b shows a view of a second embodiment of a torque limiter for a clamp for a folding bicycle frame.

### DESCRIPTION

The same references are used for similar features throughout the drawings. The features shown in the drawings are not necessarily to scale and the size and/or arrangements depicted are not limiting. The drawings include optional features which are not essential to the invention. Furthermore, not all of the features of the frame and/or bicycle are depicted in each drawing and the drawings may only show a few of the components relevant for describing a particular feature, configuration or embodiment.

The description below describes in detail how the whole bicycle may be folded to provide a compact version of the bicycle. It will be understood that aspects of the invention are not limited to providing a whole bicycle, and may only provide discrete components of a bicycle. Aspects of the invention are defined by the claims.

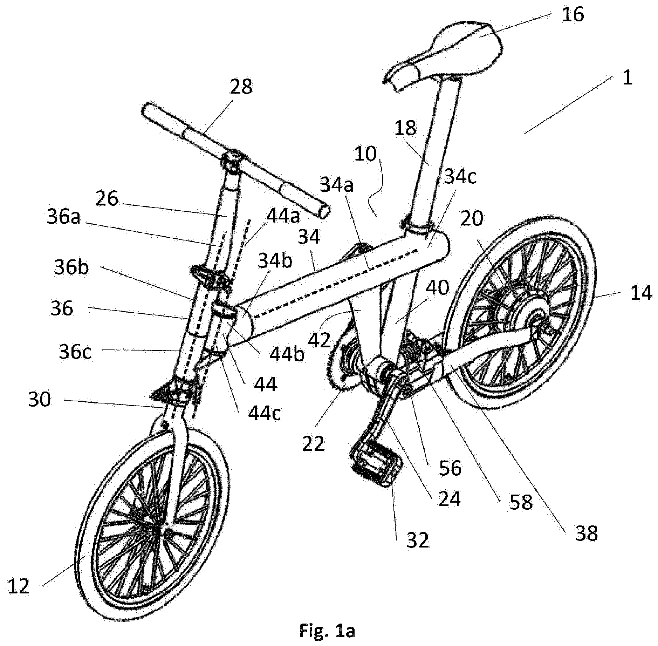

Figure 1a depicts a frame 10 for a bicycle 1 in accordance with aspects of the present invention. As shown, the frame 10 is depicted as part of a bicycle 1. In other words, the frame 10 may be a bicycle frame. The frame 10 is suitable for a bicycle 1 but may be provided separately from other components of the bicycle 1. For example, the front wheel 12, rear wheel 14, seat 16, seat post 18, rear wheel sprocket(s) 20, chain set 22, pedal cranks 24, steering member 26, handle bars 28, steerable member 30 and pedals 32. Additionally, the frame 10 is suitable for both a conventional pedal powered bicycle and an electric or power assisted bicycle, which may additionally include an electrical component, e.g. a motor, a controller and/or power source as described below.

The bicycle frame 10 as shown in the drawings includes the following component members: a main shaft 34, front shaft 36, rear wheel support(s) 38, rear shaft 40, diagonal support member 42, connection shaft 44, first connection member 46a and second connection member 46b.

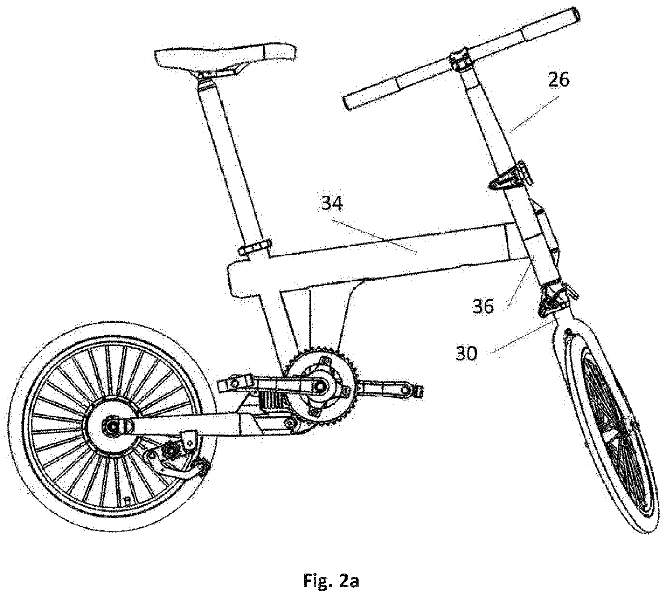

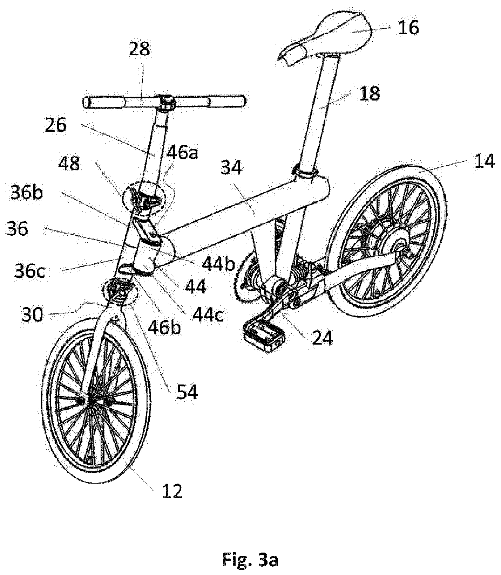

The bicycle frame may be folded by following the individual steps described as shown in figures 2a to 2e and 3a to 3e. The steps provided indicate a possible order for folding the bicycle 1, however, any other appropriate order may be used instead. Additionally, it is not necessary for the bicycle 1 to be configured to carry out all of the steps depicted in these figures.

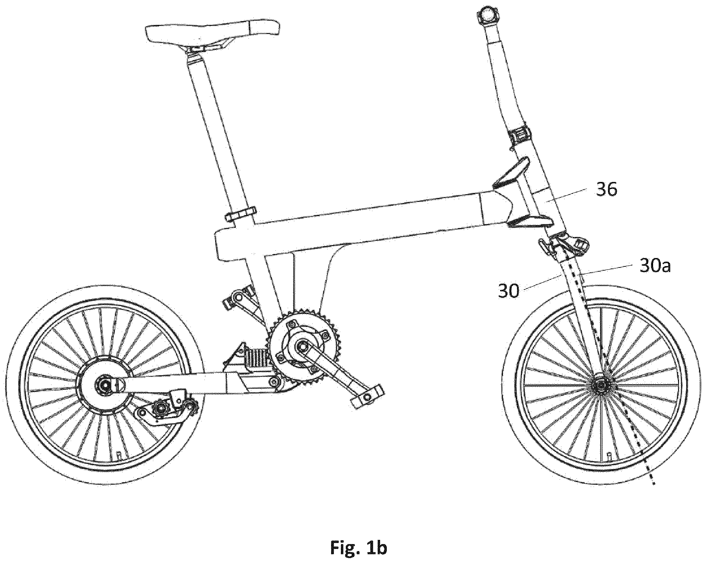

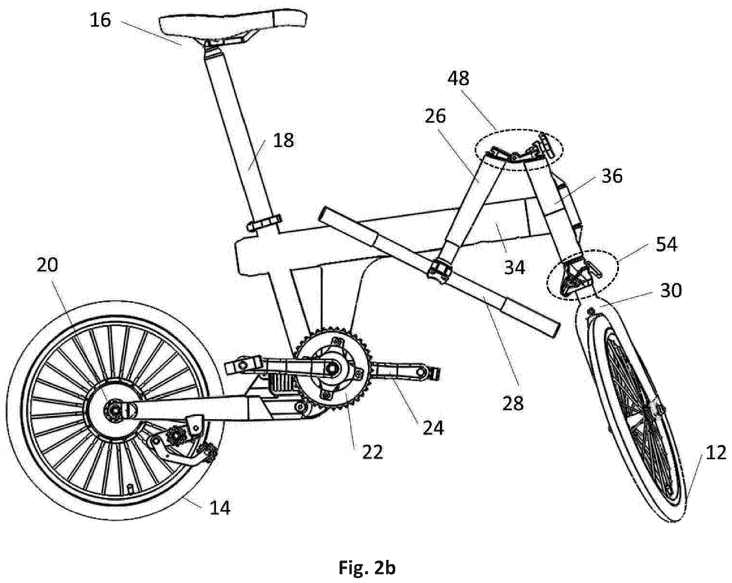

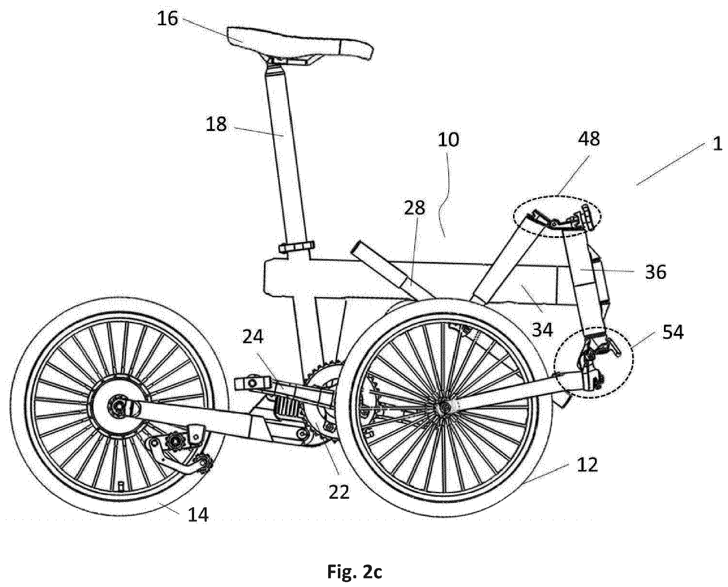

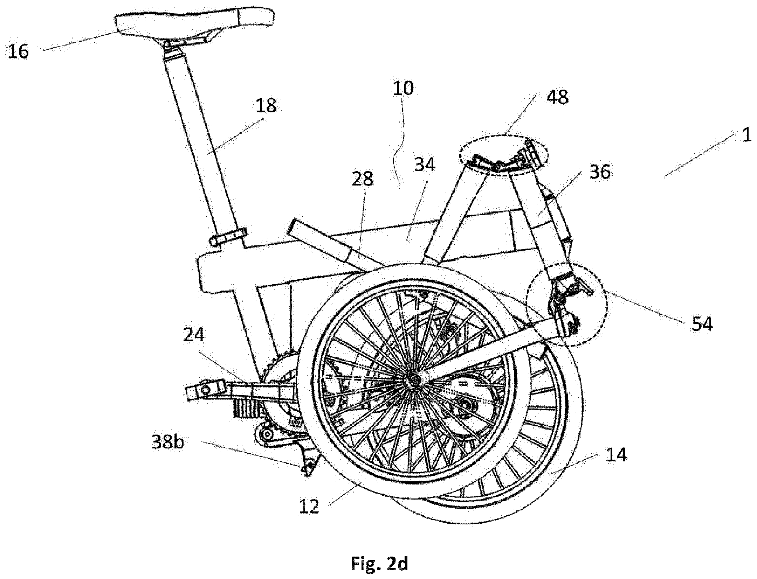

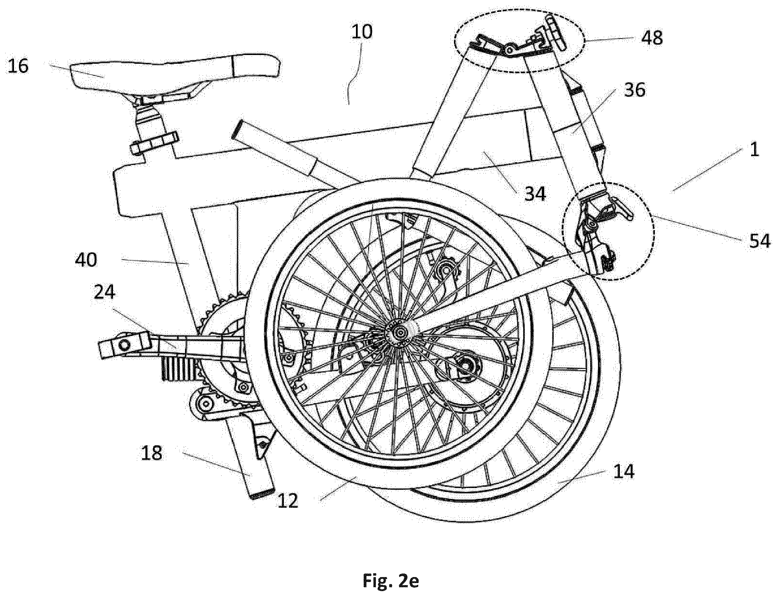

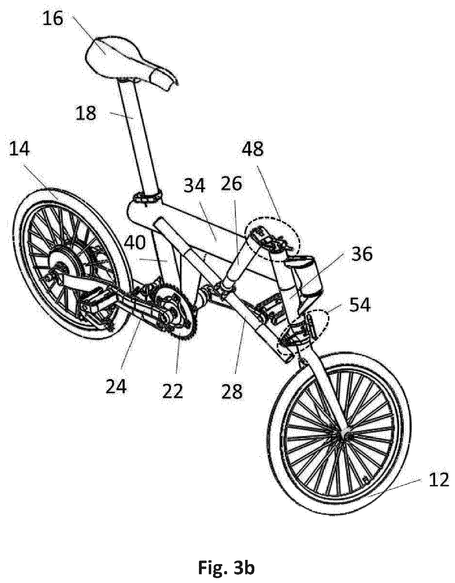

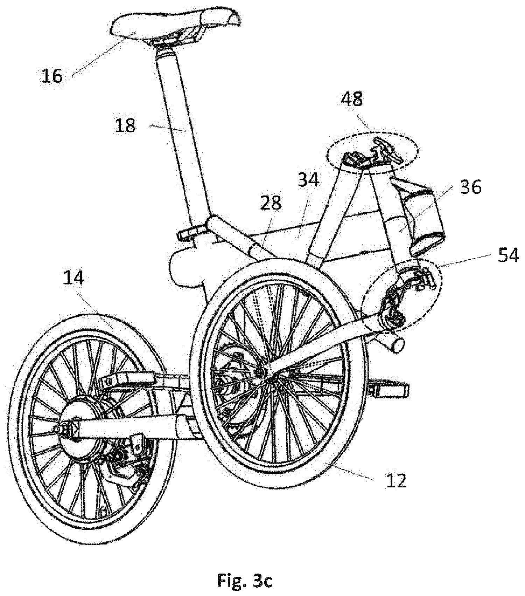

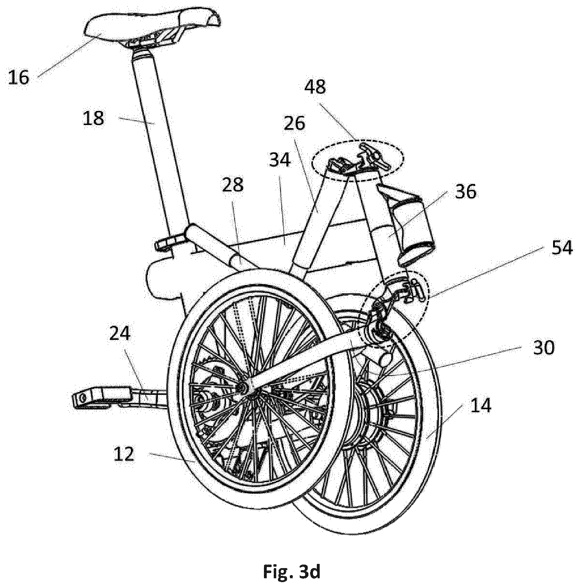

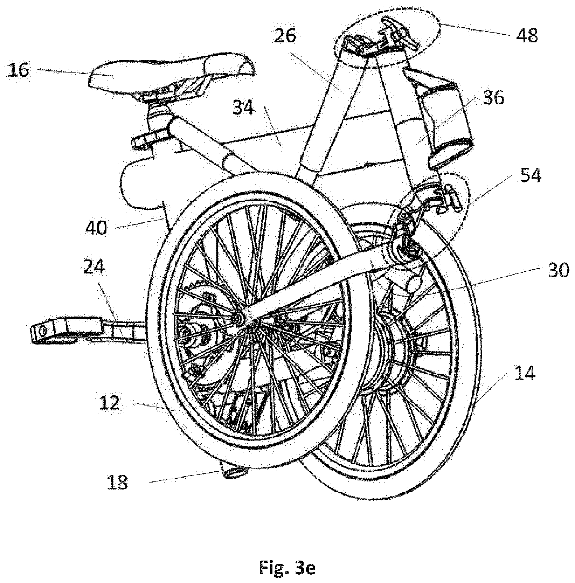

In particular, figures 2a and 3a show the steering member 26, steerable member 30 and front shaft 36 turned through ninety degrees relative to the main shaft 34. Figures 2b and 3b show the steering member 26 and handlebars 28 unclamped and folded around an axis defined by a first hinge. Figures 2c and 3c show the steerable member 30 and front wheel 12 folded around an axis defined by a second hinge, relative to and away from the front shaft 36, thereby having been rotated to the rear of the frame from a position shown in figures 1a and 1b where the steering member axis 30a is aligned with the front axis 36a to position the front wheel 12 alongside the main shaft 34. Figures 2d and 3d show the rear wheel 14 rotated forwardly, relative to and towards the main shaft 34. Figures 2e and 3e show the seat post 18 pushed fully downwards within the rear shaft 40.

The main shaft 34 provides a connection between the front shaft 36 and a rear portion of the frame 10, i.e. the rear wheel support 38, rear shaft 40 and diagonal support member 42, each as shown and identified in figure 1a. The front shaft 36 receives both the steering member 26, at a first, upper end thereof, and steerable member 30, at a second, lower end thereof. The steering member 26 mounts the handle bars 28. The steerable member 30 mounts the front wheel 12. By turning the steering member 26, a user is able to turn the steerable member 30 and thus the front wheel 12.

The front shaft 36 defines a front axis 36a, as shown in figure 1a. The front axis 36a is an imaginary line through the length of the front shaft 36 which provides a fixed reference line for the front shaft 36. The main shaft 34 defines a longitudinal axis 34a, as shown in figure 1a. The longitudinal axis 34a is an imaginary line through the length of the main shaft 34 which provides a fixed reference line for the main shaft 34. The longitudinal axis 34a is at an angle to the front axis 36a. As depicted, the front axis 36a is angled at approximately 76 degrees to the main axis 34a, however, this is not essential.

Reference to the front portion of the frame 10 in this document shall be considered reference to the main shaft 34 and front shaft 36, and their associated components. References to the rear portion of the frame 10 in this document shall be considered reference to the rear wheel support(s) 38, rear shaft 40 and diagonal support member 42, and their associated components. The first aspect of the invention is concerned with the connection between the main shaft 34 and the front shaft 36 and the means of folding the steering member 26 and steerable member 30 relative to the main shaft 34 and front shaft 36. This part of the description will thus focus on the front portion of the frame 10 with only passing reference to the rear portion of the frame 10.

The main shaft 34 has a first end portion 34b and a second end portion 34c, each as shown and identified in figure 1a. The first end portion 34b is positioned towards the front of the bicycle 1 and the second end portion 34c is positioned towards the rear of the bicycle 1. The first end portion 34b of the main shaft 34 comprises a connection shaft 44 orientated approximately 76 degrees to the main shaft 34. The connection shaft 44 defines a connection shaft axis 44a, as shown in figure 1a. The connection shaft axis 44a is an imaginary line through the length of the connection shaft 44 which provides a fixed reference line for the connection shaft 44. The connection shaft axis 44a is thus also approximately 76 degrees to the main shaft axis 34a. The connection shaft axis 44a is also spaced apart from and substantially parallel to the front shaft axis 36a. The main shaft 34 is hollow and the second end portion 34c is open to provide access for insertion of a plurality of battery cells. The second end portion 34c can be closed by a light unit that seals the main shaft 34 from external elements. Neither the battery cells nor the light unit are shown in the drawings.

The front shaft 36 also has a first end portion 36b and a second end portion 36c, each as shown and identified in figure 1a. The first end portion 36b of the front shaft 36 is orientated generally upwardly and is configured to receive the steering member 26 via a hinge 48 and the second end portion 36c is orientated generally downwardly and is configured to receive the steerable member 30 via a second hinge 54.

The front shaft 36 is connected to the main shaft 34 at the first end portion 34b of the main shaft by way of the connection shaft 44. As shown in figure 3a, a first connection member 46a connects a first end portion 44b of the connection shaft 44 to the first end portion 36b of the front shaft 36. A second connection member 46b connects a second end portion 44c of the connection shaft 44 to the second end portion 36c of the front shaft 36. A fastener, i.e. a bolt inserted through and engaging with the first connection member 46a and second connection member 46b secures the first connection member 46a and second connection member 46b to the connection shaft 44. During assembly of the bicycle 1, the steering member 26 and steerable member 30 are aligned to ensure that the footprint of the first connection member 46a and second connection member 46b, each as viewed from above, are congruent, though this is not essential and another design using two different connection members could be used, so long as they both align on one side with axis 44a, and on another side with axis 36a. The first connection member 46a and second connection member 46b may be attached to the front shaft 36 by way of welding or any other suitable attachment method. The front shaft 36 is permitted to rotate around the connection shaft axis 44a, so that the steering rotates around the frame rather than in the frame as a conventional design, as shown in figures 1a, 2a and 3a.

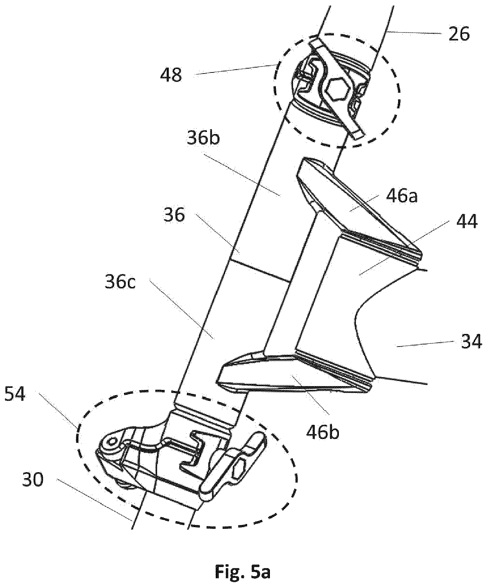

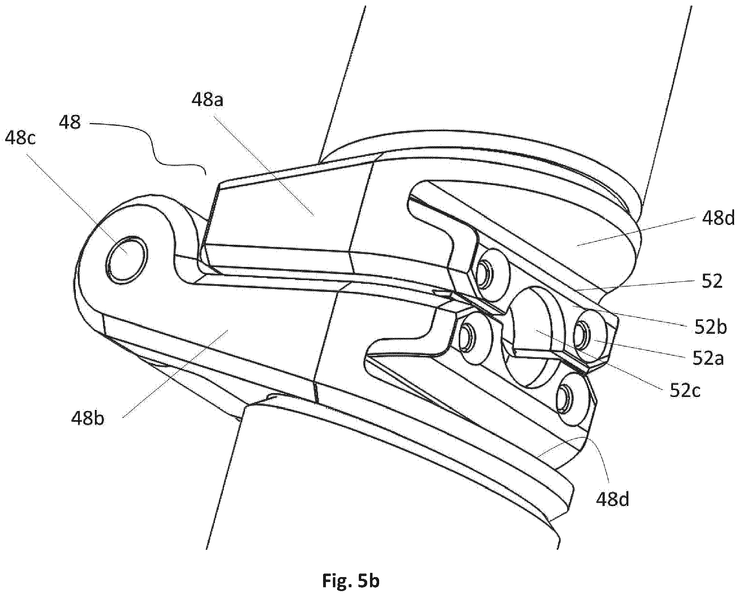

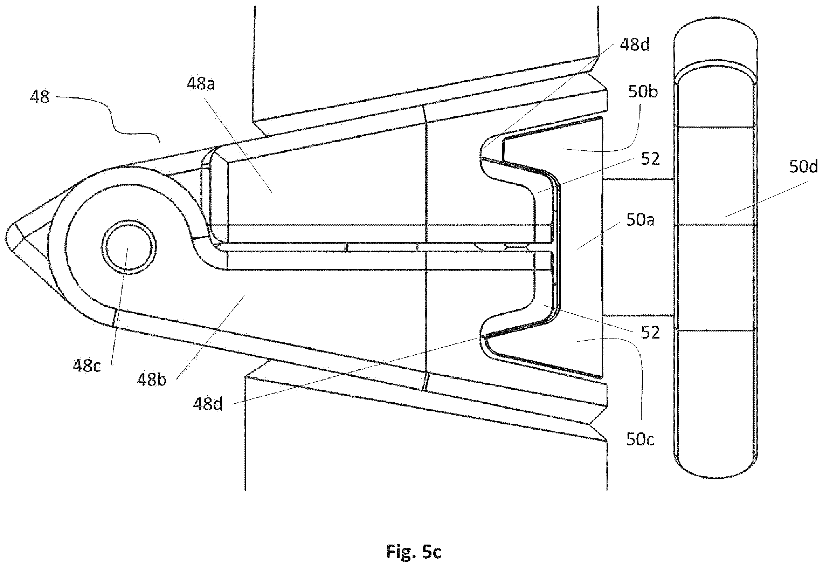

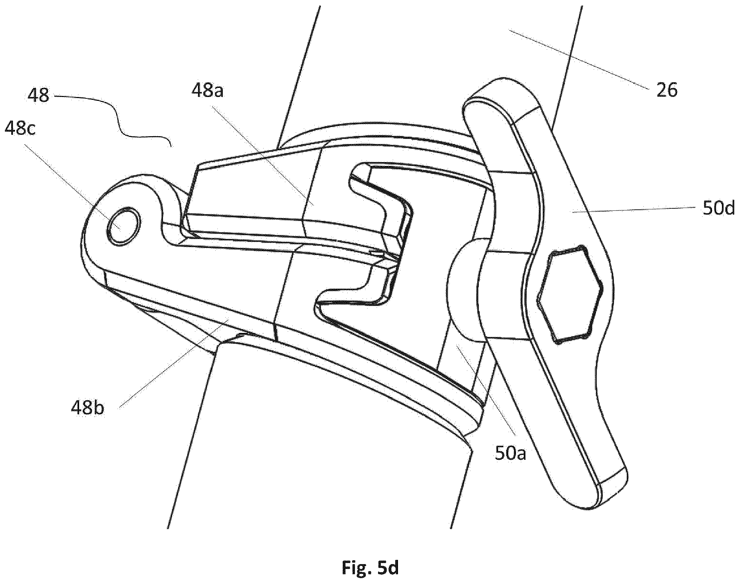

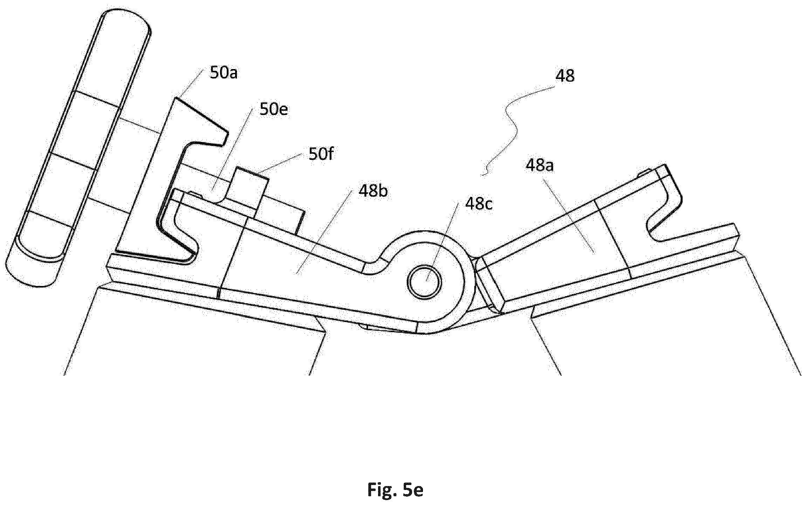

As illustrated in figure 5a, a hinged joint 48 is located above the point at which the first connection member 46a is attached to the front shaft 36 to form a joint between the front shaft 36 and steering member 26. The hinged joint 48 is shown in a closed position, i.e. when the bicycle 10 is in the unfolded state, in figures 5a to 5d. and in an open position in figure 5e. As illustrated in figures 5b, 5c, and 5d, the hinged joint 48 comprises a first hinge portion 48a and a second hinge portion 48b, each forming an integral part of the frame 10, wherein the first hinge portion 48a and second hinge portion 48b are connected together by way of a pivot 48c. Each of the first hinge portion 48a and second hinge portion 48b defines a recess 48d configured to receive a part of the clamp 50a and provide a clamping surface therefore. The clamp 50a, when in a clamped state, prevents movement of the first hinge portion 48a and/or second hinge portion 48b relative to one another. The recess 48d may receive a wear resistant article 52, which can be made from any appropriate material, for example, steel, against which the clamp 50a may engage.

An example of a wear resistant article 52 is shown in figure 5b. The wear resistant article 52 is secured to the first hinge portion 48a or second hinge portion 48b by way of two mounting holes 52a through the wear resistant article 52. The position of the mounting holes 52a corresponds with respective threaded holes in the first hinge portion 48a or second hinge portion 48b respectively. The clamping surface 52b defines a cutout 52c for passage through of the clamp bolt 50e, illustrated in figure 5e.

As illustrated in figure 5c, the clamp 50a defines a first engagement portion 50b and a second engagement portion 50c. The first engagement portion 50b is configured to insert into the recess in the first hinge portion 48a and engage against the wear resistant article 52 received therein. The second engagement portion 50c is configured to insert into the recess 48d in the second hinge portion 48b and engage against the wear resistant article 52 received therein. The wear resistant articles 52 thus define clamping interfaces for the first engagement portion 50b and second engagement portion 50c of the clamp 50a. In some embodiments, the clamp member 50a is asymmetric so that so long as the clamp actuator bolt 50e is undone only enough to allow the clamp portion 50b to disengage from the first hinge portion 48a, the clamp portion 50c remains in the second hinge portion 48b, such that the clamp 50a can not rotate around the axis of the clamp actuator bolt 50e freely, but the hinge 48 can open and close freely.

The clamp 50a further comprises a clamp actuator 50d, i.e. a rotatable handle as shown in figure 5c. The clamp bolt 50e is held captive within the clamp actuator 50d. When the bicycle 1 is unfolded, the clamp 50a is maintained in a first configuration where the first engagement portion 50b of the clamp member 50a is located within the recess 48d in the first hinge portion 48a and the second engagement member 50c of the clamp member 50a is located in the recess 48d in the second hinge portion 48b. A bolt, or other suitable fastener 50e is connected to the clamp actuator 50d and passes through the clamp member 50a. As shown in figure 5e, the bolt engages with a threaded portion 50f of the first hinge portion 48a or second hinge portion 48b. Each of the first hinge portion 48a and second hinge portion 48b are provided with a semicircular cut out to allow passage through of the bolt 50e when the bicycle 1 is unfolded. To move the clamp 50a into the first (unfolded) configuration, the steering tube 26 is required to be in an unfolded state. The clamp actuator 50d is then turned clockwise to urge the clamp member 50a against the wear resistant article 52 associated with each of the first hinge portion 48a and second hinge portion 48b. In order to move the clamp 50a from the first configuration to a second configuration, i.e. to loosen the clamp 50a during folding of the bicycle 1, the clamp actuator 50d is turned anti-clockwise to cause the clamp 50a to move out of clamping engagement with the wear resistant articles 52.

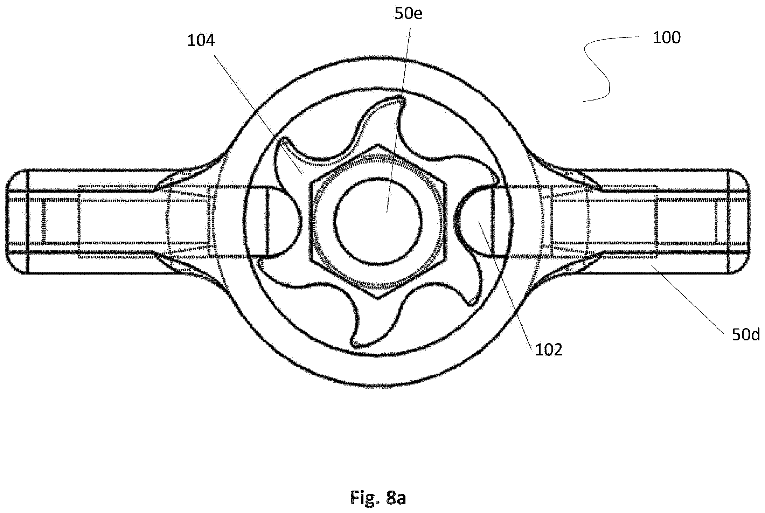

To further limit instances of catastrophic clamp 50a failure, a torque limiting device 100 is provided and shown in figure 8a. Such a torque limiting device 100 comprises at least one ball bearing 102 positioned in direct engagement with the toothed wheel 104 which holds the clamp bolt 50e. As the clamp actuator 50d is rotated to engage the clamp 50a, the ball bearing 102 is urged away from the toothed wheel 104. Resistance is provided by a resilient member, e.g. a spring underneath the ball bearing 102 inside the clamp arm (not shown) which, when the strength of the spring is overcome, the ball bearing 102 is moved out of engagement with the toothed wheel 104 thus causing tactile and audible feedback to indicate that the clamp 50a has been sufficiently tightened. Overtightening of the clamp actuator 50d is thus prevented.

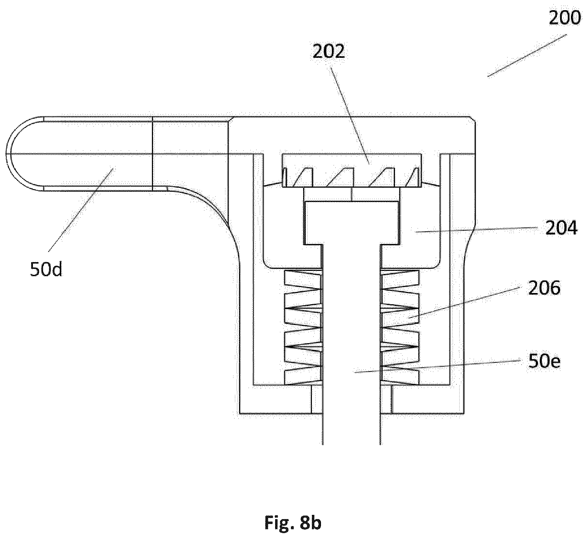

Another example of a torque limiting device is shown in figure 8b. Such a torque limiting device 200 comprises the clamp actuator 50d that is configured to rotationally drive a first toothed wheel 202. A second toothed wheel 204 is provided and configured to rotationally drive the clamp bolt 50e and is positioned on a plurality of springs 206. The plurality of springs 206 bias the second toothed wheel 204 in mesh engagement with the first toothed wheel 202 such that when the clamp actuator 50d is rotated the first and second toothed wheels 202, 204 rotate with the clamp actuator 50d. If a force is applied to the clamp actuator 50d, which causes the spring strength of the plurality of springs 206 to be exceeded, the second toothed wheel 204 is pushed downwards away from the first toothed wheel 202 thus moving the second toothed wheel 204 out of meshed engagement with the first toothed wheel 202 such that further rotation of the clamp actuator 50d rotates the first toothed wheel 202 but not the second toothed wheel 204.

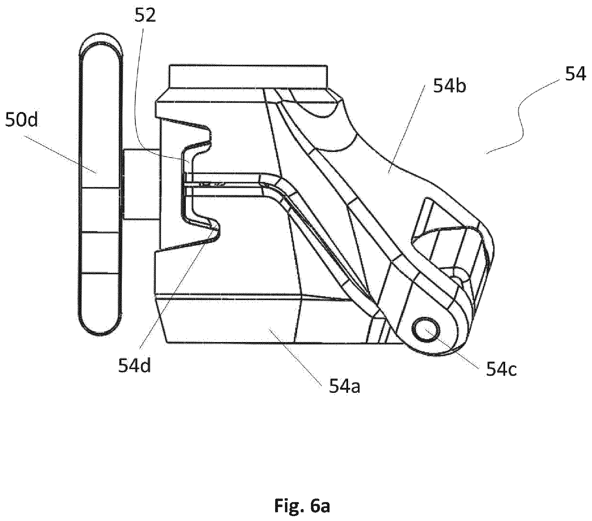

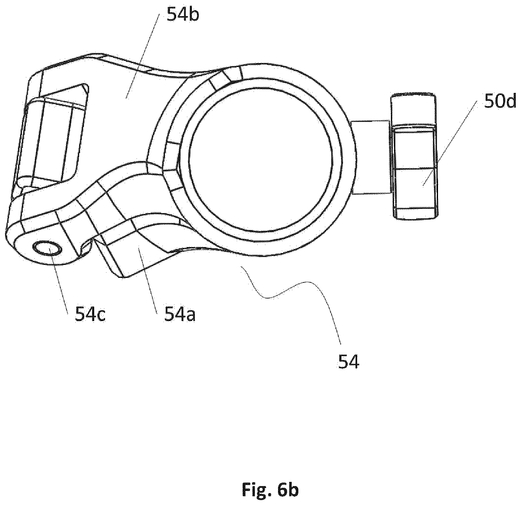

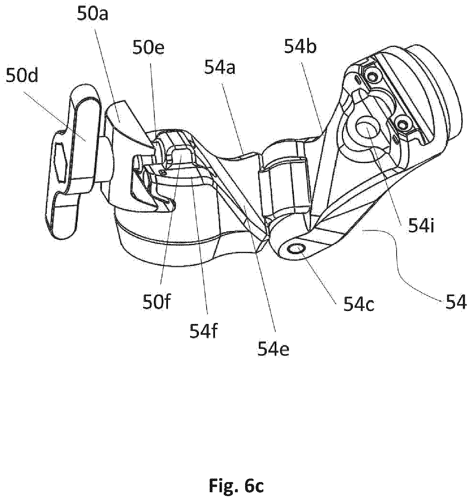

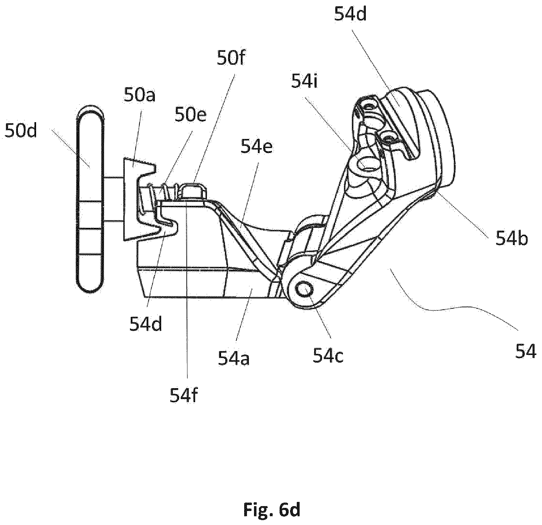

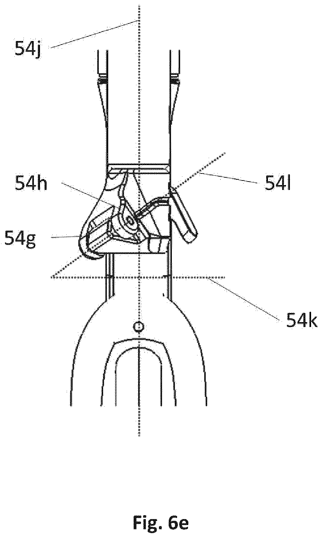

A second hinged joint 54 is provided below the point at which the second connection member 46b is attached to the front shaft second end portion 36c, defining a joint between the front shaft 36 and steerable member 30. The hinged joint 54 is shown in a closed position, i.e. when the bicycle 1 is in the unfolded state, in figures 6a and 6b and in an open position, i.e. when the bicycle 1 is in the folded state, in figures 6c and 6d. Figures 6e to 6g show the orientation of parts of the hinged joint 54 relative to the frame 10. The hinged joint 54 comprises a first hinge portion 54a and a second hinge portion 54b, each forming an integral part of the frame 10. The first hinge portion 54a and second hinge portion 54b are connected together by way of a pivot 54c.

The hinge pivot 54c is angled in two planes relative to the cross section of the front shaft 36 in order to manipulate the position of the front wheel 12 relative to the main shaft 34. As shown in figure 6e, the first hinge portion 54a fits perpendicularly to the steerable member 30. As shown in figure 6d, as with the hinge 48, a recess 54d is provided in each of the first hinge portion 54a and second hinge portion 54b. Such recess 54d is configured to receive a part of a clamp 50a and provide a clamping surface therefore. Each of the first hinge portion 54a and second hinge portion 54b are further configured to provide a swept diagonal surface 54e between a surface perpendicular to the front axis 36a, 54f, and the pivot, 54c. To achieve the folding motion necessary to move a folding bicycle 1 according to aspects of the invention between an unfolded configuration and a folded configuration, and vice-versa, the hinged joint 54 is provided in a specific orientation relative to components and geometry of the folding bicycle 1. In a preferred embodiment, the front wheel 12 is stowed in a slightly splayed configuration relative to the main shaft 34 when the folding bicycle 10 is in the folded configuration. This provides stability when both wheels 12, 14 are placed on the ground in the folded configuration of the bicycle 1.

Figure 6a illustrates the hinge pivot 54c, which defines a pivot axis around which the second hinge portion 54b may rotate relative to the first hinge portion 54a when the folding bicycle 1 is moved between the unfolded and folded configurations, and vice versa. The orientation of the pivot axis is critical to providing the desired motion of the steerable member 30 and front wheel 12 relative to the main shaft 34. In the preferred embodiment, the angle of the pivot axis is defined through taking the following steps, referring to figures 6e to 6g: i) orientating the folding bicycle 1 such that the front wheel 12 is facing forwards and is in line with the rear wheel 14; ii) viewing the folding bicycle 1 from the front, assign a mid-plane 54j through the centre of the front shaft 36 as illustrated in figure 6e; iii) assigning a plane 54k normal to the front shaft axis 36a; iv) assign a further plane 541 that is initially parallel to the plane 54k and then rotated by between 20 and 50 degrees, or more preferably between 30 and 40 degrees, or even more preferably, 34.5 degrees from the plane 54k in an anti-clockwise direction. The pivot axis of the hinge pivot 54c lies in this plane.

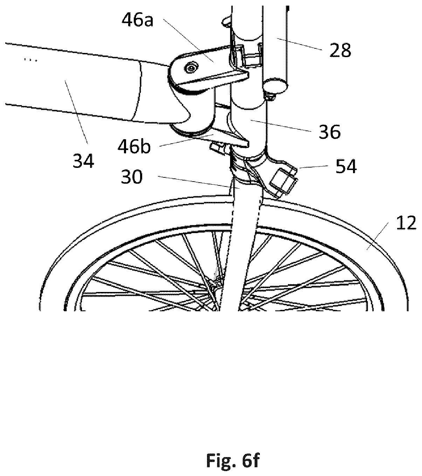

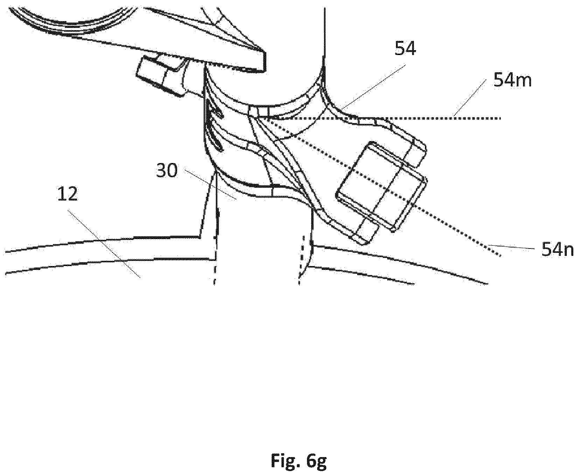

The hinge pivot 54c comprises a left end 54g and a right end 54h, when viewed from the front, as illustrated in figure 6e. As viewed from the front of the folding bicycle 1, the right end 54h of the hinge pivot 54c is seen to be higher than left end 54g when the front wheel 12 is facing forward and in alignment with the rear wheel 14. The orientation of the hinge 54 is offset from the mid-plane 54j of the folding bicycle 1, as shown in figures 6f and 6g, such that a line defined perpendicularly to the hinge pivot axis and positioned equidistant between the left end 54g and right end 54h thereof is defined as follows: vi) viewing the folding bicycle 1 from a view above and parallel to the angled plane 54I; vii) assigning an axis 54m to the intersection of planes 541 and 54j; viii) assigning another line 54n at an angle of between 20 and 50 degrees, or more preferably between 30 and 40 degrees, or even more preferably, 32.5 degrees clockwise from the line 54m; and ix) orientating the pivot hinge axis such that it is perpendicular to the line 54n. This is shown in figures 6f and 6g.

The hinge pivot axis 54c of the hinge 54 will lie at a distance of approximately 30 to 50 mm from the front shaft axis 36a measured at their closest point.

As shown in figures 6a to 6d, each of the first hinge portion 54a and second hinge portion 54b defines a recess 54d configured to receive a clamp 50a and provide a clamping surface therefore. The clamp 50a, when in a clamped state, prevents movement of the first hinge portion 54a and/or hinge portion 54b relative to one another. The recess 54d may receive a wear resistant article 52, which can be made from any appropriate material, for example steel, against which the clamp 50a may engage. Details of the clamp 50a and wear resistant article, and clamping engagement of the same are described in detail above.

To limit instances of catastrophic clamp failure, a hollow 54i (as shown in figure 6c in respect of the second hinge joint - a corresponding hollow could be provided in the first hinge joint 48 but is not shown). The hollow 54i is provided in one of the first hinge portion 54a or second hinge portion 54b. As described above, a clamp bolt 50e engages with a threaded hole 50f in one of the first hinge portion 54a or second hinge portion 54b. The hollow 54i is provided in the other of the first hinge portion 54a or second hinge portion 54b. In the event of clamp 50a failure, the first hinge portion 54a and second hinge portion 54b will remain clamped by virtue of the clamp bolt 50e remaining engaged with the threaded hole 50f in one of the first hinge portion 54a or second hinge portion 54b and the hollow in the other of the first hinge portion 54a or second hinge portion 54b. For this part of the description, first hinge portion 54a also refers to first hinge portion 48a and second hinge portion 54b also refers to second hinge portion 48b.

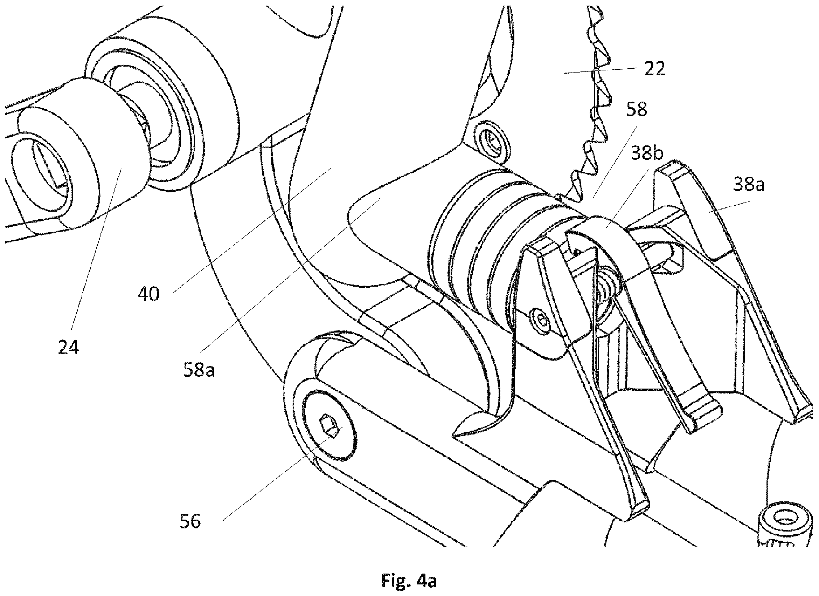

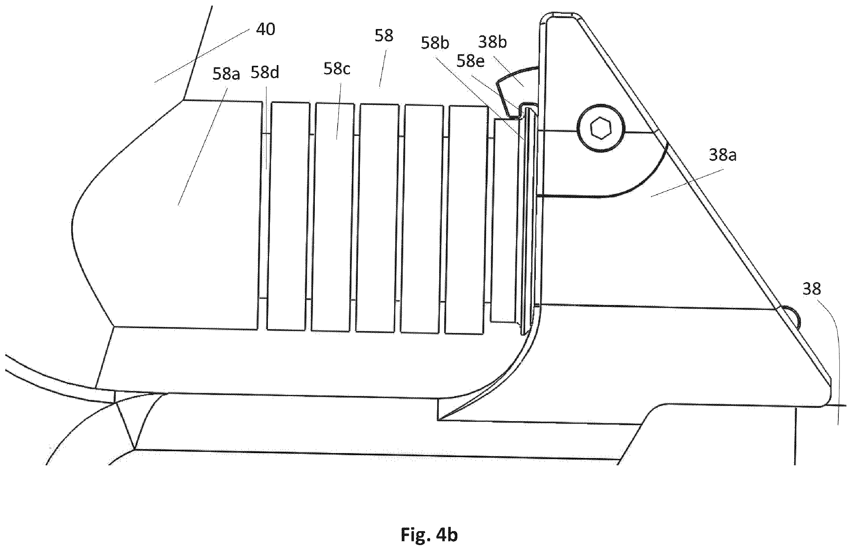

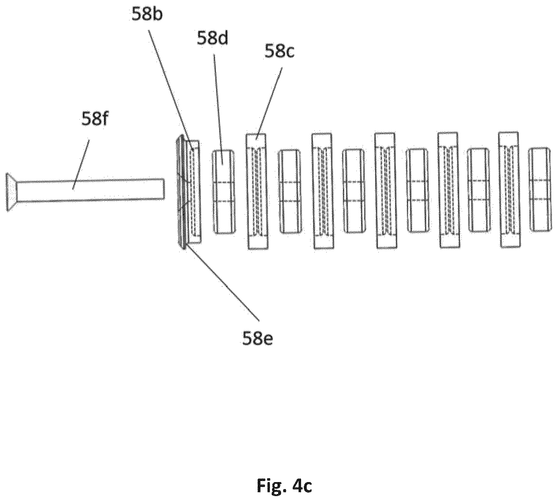

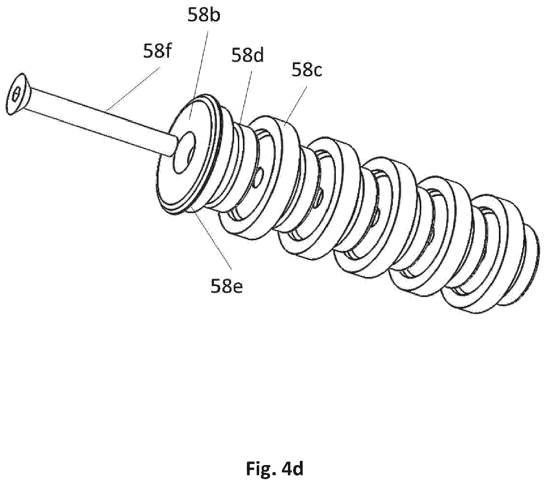

As shown in figure 1a the rear wheel carrier 38 is connected to the rear shaft 40 of the frame 10 by way of a pivot connection 56. When the bicycle 1 is in its unfolded state, the pivot connection 56 is locked by way of a suspension mechanism 58 provided between the rear shaft 40 and the rear wheel carrier 38 and is illustrated in figures 4a to 4d. The suspension mechanism 58 may be an integral part of and extend rearwardly from the rear shaft 40. Alternatively, the suspension mechanism 58 may be selectively attachable to the rear shaft 40.

As depicted in figures 4a to 4d, the suspension mechanism 58 comprises a first end portion 58a in engagement with the rear shaft 40 and a second end portion 58b configured to allow selective engagement with the rear wheel carrier 38. The rear wheel carrier 38 comprises a locking mount 38a and a latch 38b. The locking mount 38a receives the second end portion 58b of the suspension mechanism 58. The second end portion 58b of the suspension mechanism 58 comprises a detent 58e with which the latch may engage when the bicycle 1 is in its unfolded state. Between the first end portion 58a and second end portion 58b of the suspension mechanism is provided a structure made up of solid discs 58c and resilient discs 58d between the solid discs 58c. In one embodiment the solid discs 58c may be formed from an aluminum alloy and the resilient discs 58d may be formed from polyurethane. In the illustrated embodiment, each solid disc 58c has an annular recess in both planar faces against which a resilient disc 58d abuts. Each solid disc 58c has a diameter of 36 mm and a thickness of 6.1 mm. The annular recess of each solid disc 58c has a depth of 2.8 mm and a diameter of 28 mm. Each resilient disc 58d has a diameter of 26 mm and a thickness of 6.6 mm. The structure is held together by way of a bolt 58f, or other suitable fastener extending axially through each of the solid discs 58c and resilient discs 58d. The fastener 58f engages with the second end portion 58b of the suspension mechanism 58 and is fastened to the first end portion 58a which is attached to the rear shaft 40 of the frame 10, for example by threading into a threaded article, e.g. a nut or threaded hole. The suspension mechanism 58 is shown as being located adjacent to the chain set 22 and/or pivot connection 56. While this position is preferable for the reasons described above, the suspension mechanism 58 may be positioned elsewhere on the frame 10.

The latch 38b of the rear wheel carrier 38 comprises a handle including a projection configured to engage with the detent 58e of the second end portion 58b of the suspension mechanism 58. When the bicycle 1 is in the unfolded state, the latch 38b holds the rear shaft 40 and the rear wheel carrier 38 in a fixed relationship with one another. To fold the rear wheel carrier 38, and consequently the rear wheel 14, the handle of latch 38b is actuated to release the latch 38b from the detent 58e of the suspension mechanism 58. The rear wheel carrier 38 can then be rotated forwards around the pivot 56 between the rear shaft 40 and the rear wheel carrier 38.

A bicycle 1 incorporating a frame 10 according to the present invention can thus be maneuvered from an unfolded state to a folded state in accordance with a combination of some, or all, of the following steps, as shown in figures 2a to 2e and 3a to 3e;

Step one - rotating the front shaft 36 around the connection shaft axis 44a by an angle of approximately ninety degrees such that the front wheel 12 is orientated substantially perpendicularly to the main shaft axis 34a.

Step two - releasing the clamp 50a of the hinge 48 between the front shaft 36 and steering member 26 and folding the steering member 26 downwards such that the handlebars 28 are moved into close engagement with the main shaft 34. The handlebars 28 are secured to the main shaft 34 by way of a retaining feature or fastener (not shown).

Step three - releasing the clamp 54 between the front shaft 36 and steerable member 30, and folding the steerable member 30 first outwardly and then rearwardly such that a part of the steerable member 30 and/or front wheel 12 is moved into close engagement with the main shaft 34 and secured to the bicycle frame 10 by way of a retaining feature (not shown) further to the retaining feature mentioned above. This step results in the steerable member axis 30a being rotated out of axial alignment with the front shaft axis 36a. The rotation is such that the steerable member 30 and front wheel 12 are rotated first outwardly and then rearwardly around a single hinge axis 54c (defined below) through approximately 122 degrees. The angle of the hinge axis causes the front wheel 12 to move from a position in which the front wheel rotational axis is substantially parallel to the main shaft axis 34a when the front shaft 36 has been rotated in accordance with step one to a position in which the front wheel rotational axis is substantially perpendicular to the main shaft axis 36a.

Step four - releasing the latch 38b of the rear wheel carrier 38 to release the suspension mechanism 58 and moving the rear wheel carrier 38, and consequently the rear wheel 14, forwards.

Step five - releasing the seat post 18 and pushing the seat post 18 fully down into the rear shaft 40 such that the seat post 18 protrudes out of a lower end of the rear shaft 40 and prohibits the rear wheel carrier 38 from being rotated rearwardly until the seat post 18 is again extended from the rear shaft 40.

Unfolding the bicycle 1 generally involves following the above steps in reverse.

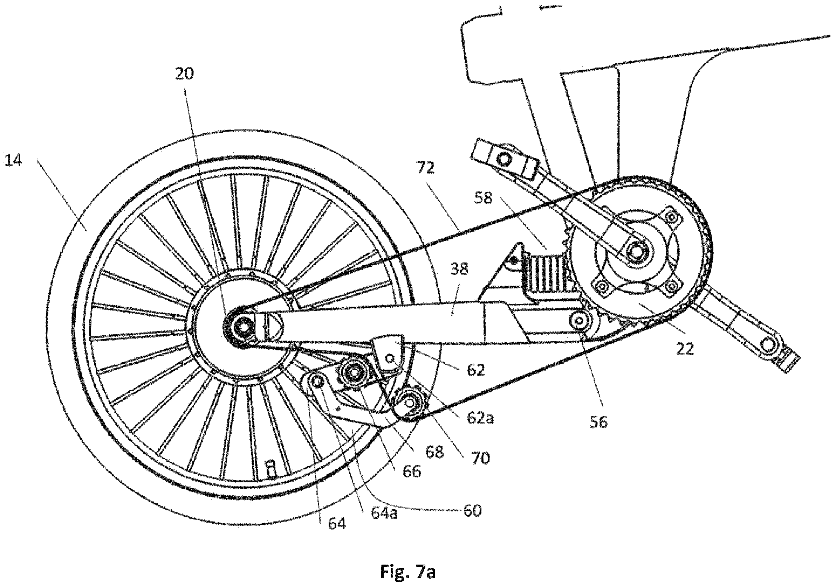

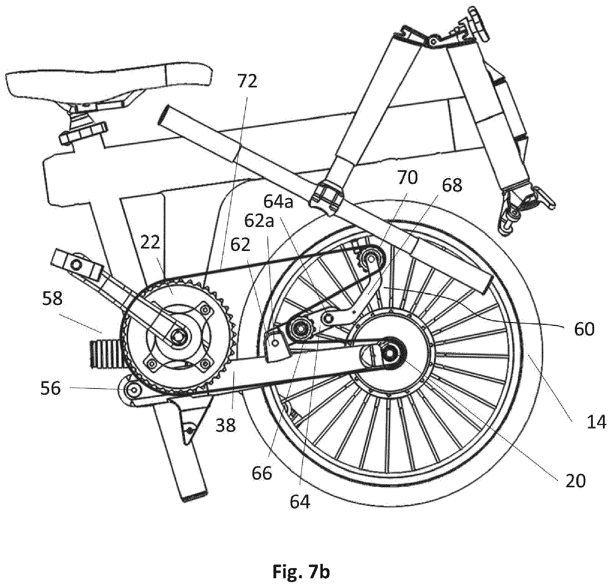

As shown in figures 7a and 7b, a chain tensioner 60 is provided. The chain tensioner 60 is used to maintain chain tension when the bicycle 1 is in the folded configuration. A chain tensioner mount 62 attaches to the rear wheel carrier 38 and projects downwardly from the rear wheel carrier 38 when the folded bicycle 1 is in the unfolded configuration. The chain tensioner mount 62 comprises a mounting hole 62a for permitting connection to a fixed arm 64 that mounts a first jockey wheel 66. The fixed arm 64 is provided with a mounting hole 64a for permitting connection to a sprung arm 68 that mounts a second jockey wheel 70. The sprung arm 68 is biased in a first configuration as shown in figure 7a. In the first configuration, the bicycle's 1 chain 72 extends around the chain set 22, rear wheel sprocket 20 and second jockey wheel 70. The first jockey wheel 66 is positioned outside of the chain 72 but is in contact with the chain 72. As illustrated in figure 7b, (the steerable member 30 and front wheel 12 are omitted here for clarity), when the bicycle 1 is moved from the unfolded configuration to the folded configuration, the sprung arm 68 rotates around an axis defined by the mounting hole 64a on the fixed arm 64 so as to maintain chain 72 tension. When the rear wheel 14 is moved forwards, the chain 72 remains the same length, hence without use of a chain tensioner the chain 72 would become slack and liable to become disengaged with the chain set 22 and/or rear wheel sprocket 20. The chain tensioner 60 of the present invention alleviates this problem by moving the position of the second jockey wheel 70 to urge the chain 72 around the first jockey wheel 66. When the bicycle 1 is moved back from the folded configuration to the unfolded configuration, the position of the sprung arm 68 is biased to move back to that position illustrated in figure 7a.

Some embodiments of the invention are provided with folding pedals 32 that are configured to fold towards the pedal cranks 24. Other embodiments of the invention are provided with pedals 32 that are easily removable from the pedal cranks 24.

The frame 10 referred to above may be some form of rigid structure and can be made from any appropriate material. Known materials include but are not limited to steel, aluminum alloys, titanium, titanium alloys, carbon fiber, thermoplastic, magnesium alloys, scandium, beryllium, bamboo, wood and a combination of at least any two of these materials.

The drawings depict a bicycle 1, which is described above. However, the frame 10 can be folded and configured without any additional attachments indicated above. Thus, the frame 10 may still function in the same way as described for the bicycle above without being limited to including any additional features. The above clearly describes how the frame 10 can function when in use as part of a bicycle 1. The above examples are mainly used to describe a frame 10 which is used as part of a bicycle 1 as depicted. However, the frame 10 can be provided separately. Where the frame 10 is referred to throughout the application is interchangeable with reference to the bicycle 1 when the frame 10 is used in a bicycle 1. Additionally, reference to the bicycle 1 is interchangeable with reference to the frame 10.

A bicycle 1 may be provided comprising the frame 10 described above with any of the above variations and components. The bicycle 1 may be an electric bicycle, i.e. may comprise and/or support electrical components. The main shaft 34 of the frame 10 may be configured to house a power source for a motor. The power source may be at least one battery. Thus, the main shaft 34 may preferably be substantially straight and without any folding joints in order to more easily house the battery/batteries and allow the battery/batteries to be easily positioned in and removed from the main shaft 34. Alternatively, the power source may be stored elsewhere, e.g. in another shaft or externally attached to the frame 10. The main shaft 34 may also house a controller configured to control the motor and/or a power source management system configured to control the power source. These components will be more easily positioned and removed from the main shaft if the main shaft 34 is substantially straight. These components could also be positioned elsewhere.

The bicycle 1 may optionally comprise or support a motor, e.g. an electric motor, configured to assist turning at least one of the wheels 12 or 14 of the bicycle 1 and a power source configured to power the motor.

Although a frame 10 used for a bicycle 1 is described above, the bicycle 1 may more generally be a pedal bicycle. In other words, any number of wheels may be provided as long as there at least two wheels. The frame 10 may be adapted to connected to the additional wheels, and the frame 10 may be adapted to fold the additional wheels in a similar manner to that described above.

## Claims

1. A frame (10) for a folding bicycle (1), the frame comprising: a front shaft (36) having a first end portion (36b) for connection to a steering member (26) and a second end portion (36c) for connection to a steerable member (30), the front shaft defining a first axis (36a) and the steerable member defining an axis of rotation for a front wheel (12); and, a main shaft (34) for providing a connection between the front shaft and a rear portion of the frame and extending generally rearwardly away from the front shaft the main shaft defining a second, longitudinal axis (34a) extending generally rearwardly away from the front shaft; and a third axis (44a) through a connection shaft (44) configured to be spaced apart from and parallel to the first axis and around which the front shaft is rotatably mounted; wherein a first hinged joint (54) connects the front shaft and steerable member and defines a first hinge axis (54c, 54I) configured to be angled from a plane (54k) defined perpendicularly to the first axis when viewed from the front of the frame; and wherein, when the frame is in an unfolded configuration, the front shaft, steering and steerable members are substantially axially aligned where the steering and steerable members connect to the front shaft, and are positioned forward of the main shaft, and the front shaft is permitted to rotate around the third axis (44a), so that the steering member (26) rotates around the frame, and when the frame is moved to a folded configuration: i) the front shaft is rotated around the third axis to position the steerable member to one side of the main shaft; and ii) the steerable member is rotated around the first hinge axis (54c, 54I) defined by the first hinged joint (54) such that the steerable member is moved first outwardly and then rearwardly relative to the front shaft and the axis of rotation for a front wheel is moved from a first angular orientation relative to the second axis to a second angular orientation relative to the second axis.

2. A frame (10) for a folding bicycle (1) according to claim 1, further comprising a second hinged joint (48) which connects the front shaft (36) and steering member (26); wherein the steering member is configured to rotate about a second hinge axis (48c) defined by the second hinged joint that is substantially perpendicular to the first axis (36a) to move the steering member relative to the front shaft from an unfolded configuration to a folded configuration.

3. A frame (10) for a folding bicycle (1) according to any preceding claim, wherein the first hinged joint (54) and/or the second hinged joint (48) further comprises a clamp (50a) configured to selectively permit or prevent separation of the first portion of the first and/or second hinged joint and second portion of the first and/or second hinged joint.

4. A frame (10) for a folding bicycle (1) according to claim 3, wherein the clamp (50a) comprises a clamping member having a first engagement portion (50b) and a second engagement portion (50c) and a clamp actuator (50d) ; and wherein the first engagement portion is configured to engage with the first portion of the first and/or second hinged joint (48, 54) and the second engagement portion is configured to engage with the second portion of the first and/or second hinged joint; and wherein the clamp actuator comprises a torque limiter.

5. A folding bicycle (1) comprising the frame (10) of claims 1 to 4 and further comprising a front wheel (12) mounted to the steerable member (30) and, in a view parallel to the ground looking down on the bike, configured to move from: i) a position in which the axis of rotation of the front wheel appears to be substantially aligned with the second axis (34a) when the front shaft is positioned to one side of the main shaft; to ii) a position in which the axis of rotation of the front wheel is substantially perpendicular to the second axis when the steerable member is rotated around the first hinge axis (54c, 54I).

6. A folding bicycle (1) comprising a frame (10) according to any one of claims 1 to 2 or a folding bicycle according to claim 5 when not depending on claim 3 or 4, the first or second hinged joint (48, 54) comprising a first frame member (36) of the frame, a second frame member (26, 30) of the frame, a hinge (48, 54) connecting the first and second frame members to allow the first and/or second frame members to move between a first open hinge position and a second closed hinge position with respect to one another, and a clamp (50a), wherein the clamp is configured to restrain the first and/or second frame member in the first and/or second position, the first or second hinged joint further comprising a wear resistant article integrated into the first and/or second frame member, wherein at least a portion of the wear resistant article is configured to be in facing contact with a portion of the clamp when the first and/or second frame member is in the second closed hinge position with respect to the first frame member.

7. A folding bicycle (1) according to claim 6, wherein the wear resistant article has higher wear resistance properties than the first and/or second frame members.

8. A folding bicycle (1) comprising a frame (10) according to any one of claims 1 to 4 or a folding bicycle according to any one of claims 5 to 7, further comprising a suspension article (58) for a bicycle, the suspension article comprising a first end (58a) configured to be mounted to a first frame portion (40) of the frame and a second end (58b) configured to be mounted to a second frame portion (38) of the frame, wherein a plurality of longitudinally spaced apart resilient discs (58d) are provided between the first and second end of the suspension article, and each resilient disc is separated by at least one solid disc (58c) such that when the bicycle is subject to a first load state, the spacing between the solid discs is maintained and when the bicycle is subject to a second load state, greater than the first load state, the spacing between the solid discs is reduced through deformation of the plurality of resilient discs.

9. A folding bicycle (1) according to claim 8, wherein each of the plurality of solid discs (58c) comprises an annular endstop against which a resilient disc (53d) abuts such that the annular endstop of adjacent solid discs provides a finite distance that the spacing between adjacent solid discs can be reduced by when the bicycle is subject to the second load state.

10. A folding bicycle (1) according to claim 8 or claim 9, wherein each of the plurality of resilient discs (58d) and solid discs (58c) is clamped between the first frame portion (40) and second frame portion (38).

11. A folding bicycle (1) comprising a frame (1) according to any one of claims 1 to 4 or a folding bicycle according to any one of claims 5 to 10, the frame further comprising a rear shaft (40) defining an axis extending substantially perpendicularly to the longitudinal axis (34a) of the main shaft (34) and a rear wheel carrier (38) extending rearward from the rear shaft; wherein a pedal crank (24) bearing housing is provided at a lower end of the rear shaft and a suspension mechanism (58) is provided between the rear shaft and the rear wheel carrier adjacent to the pedal crank bearing housing.

12. A folding bicycle (1) comprising a frame (10) according to any one of claims 1 to 2 or a folding bicycle according to any one of claim 5 when dependent on claims 1 and 2, or claims 8 to 11 when not dependent on any of claims 3, 4, 6 and 7, the first or second hinged joint (48, 54) comprising a first frame member (36) of the frame, a second frame member (26, 30) of the frame, a hinge (48, 54) connecting the first and second frame members to allow the first and/or second frame members to move between an open position and a closed position with respect to one another, and a clamp (50a), wherein the clamp is a part of the first frame member and is configured to selectively restrain the first and/or second frame member in the closed position, the first or second hinged joint further comprising a hollow (54i) for receiving a portion of the clamp when the first or second hinged joint is in the closed position, said hollow being a part of the second frame member and configured to restrain the first or second hinged joint in the closed position.

13. A folding bicycle (1) comprising a frame (10) according to any one of claims 1 to 2 or a folding bicycle according to any one of claim 5 when dependent on claims 1 or 2, or claims 8 to 11 when not dependent on any of claims 3, 4, 6 and 7, further comprising a torque limiter (100) for a clamp (50a) used on the folding bicycle, the torque limiter comprising a ball bearing (102) in contact with a toothed wheel (104) containing the clamp bolt (50e) and a resilient member biasing the ball bearing into engagement with the toothed wheel, wherein upon a torque exceeding a threshold being applied to the clamp actuator, the biasing force of the resilient member is overcome and the ball bearing is urged out of engagement with the toothed wheel.

14. A folding bicycle (1) comprising a frame (10) according to any one of claims 1 to 2 or a folding bicycle according to any one of claim 5 when dependent on claims 1 or 2, or claims 8 to 11 when not dependent on any of claims 3, 4, 6 and 7, further comprising a torque limiter (200) for a clamp (50a) used on the folding bicycle, the torque limiter comprising a clamp actuator (50d) with a toothed wheel (202) in engagement with another toothed wheel (204) containing the clamp bolt, placed on a plurality of springs (206), wherein upon a torque exceeding a threshold being applied to the clamp actuator, the biasing force of the plurality of springs is overcome and the toothed wheels are moved out of engagement.

## Patentansprüche

1. Rahmen (10) für ein Faltrad (1), wobei der Rahmen umfasst: einen vorderen Schaft (36), der einen ersten Endabschnitt (36b) zur Verbindung mit einem Lenkelement (26) und einen zweiten Endabschnitt (36c) zur Verbindung mit einem lenkbaren Element (30) aufweist, wobei der vordere Schaft eine erste Achse (36a) definiert und das lenkbare Element eine Drehachse für ein Vorderrad (12) definiert; und einen Hauptschaft (34), um eine Verbindung zwischen dem vorderen Schaft und einem hinteren Abschnitt des Rahmens bereitzustellen und sich im Allgemeinen nach hinten von dem vorderen Schaft weg zu erstrecken, wobei der Hauptschaft eine zweite Längsachse (34a) definiert, die sich im Allgemeinen nach hinten von dem vorderen Schaft weg erstreckt; und eine dritte Achse (44a) durch einen Verbindungsschaft (44), die so konfiguriert ist, dass sie von der ersten Achse beabstandet und parallel zu dieser ist, und um die herum der vordere Schaft drehbar montiert ist; wobei ein erstes Scharniergelenk (54) den vorderen Schaft und das lenkbare Element verbindet und eine erste Scharnierachse (54c, 54l) definiert, die konfiguriert ist, um von einer Ebene (54k) abgewinkelt zu sein, die senkrecht zu der ersten Achse definiert ist, wenn sie von der Vorderseite des Rahmens betrachtet wird; und wobei, wenn sich der Rahmen in einer aufgeklappten Konfiguration befindet, der vordere Schaft, die Lenk- und lenkbaren Elemente im Wesentlichen axial ausgerichtet sind, wobei die Lenk- und lenkbaren Elemente mit dem vorderen Schaft verbunden sind, und vor dem Hauptschaft positioniert sind und sich der vordere Schaft um die dritte Achse (44a) herum drehen darf, so dass sich das Lenkelement (26) um den Rahmen herum dreht, und wenn der Rahmen in eine zusammengeklappte Konfiguration bewegt wird: i) der vordere Schaft um die dritte Achse herum gedreht wird, um das lenkbare Element auf einer Seite des Hauptschafts zu positionieren; und ii) das lenkbare Element um die durch das erste Scharniergelenk (54) definierte erste Scharnierachse (54c, 54l) so gedreht wird, dass das lenkbare Element zuerst nach außen und dann nach hinten relativ zu dem vorderen Schaft bewegt wird und die Drehachse für ein Vorderrad von einer ersten Winkelausrichtung relativ zu der zweiten Achse in eine zweite Winkelausrichtung relativ zu der zweiten Achse bewegt wird.

2. Rahmen (10) für ein Faltrad (1) nach Anspruch 1, ferner umfassend ein zweites Scharniergelenk (48), das den vorderen Schaft (36) und das Lenkelement (26) verbindet; wobei das Lenkelement konfiguriert ist, um sich um eine zweite Scharnierachse (48c) zu drehen, die durch das zweite Scharniergelenk definiert ist, das im Wesentlichen senkrecht zur ersten Achse (36a) ist, um das Lenkelement relativ zu dem vorderen Schaft von einer aufgeklappten Konfiguration in eine zusammengeklappte Konfiguration zu bewegen.

3. Rahmen (10) für ein Faltrad (1) nach einem der vorhergehenden Ansprüche, wobei das erste Scharniergelenk (54) und/oder das zweite Scharniergelenk (48) ferner eine Klemme (50a) umfassen, die konfiguriert ist, um eine Trennung des ersten Abschnitts des ersten und/oder zweiten Scharniergelenks und des zweiten Abschnitts des ersten und/oder zweiten Scharniergelenks selektiv zuzulassen oder zu verhindern.

4. Rahmen (10) für ein Faltrad (1) nach Anspruch 3, wobei die Klemme (50a) ein Klemmelement mit einem ersten Eingriffsabschnitt (50b) und einem zweiten Eingriffsabschnitt (50c) und einen Klemmbetätiger (50d) umfasst; und wobei der erste Eingriffsabschnitt konfiguriert ist, um mit dem ersten Abschnitt des ersten und/oder zweiten Scharniergelenks (48, 54) in Eingriff zu kommen, und der zweite Eingriffsabschnitt konfiguriert ist, um mit dem zweiten Abschnitt des ersten und/oder zweiten Scharniergelenks in Eingriff zu kommen; und wobei der Klemmbetätiger einen Drehmomentbegrenzer umfasst.

5. Faltrad (1), umfassend den Rahmen (10) der Ansprüche 1 bis 4 und ferner umfassend ein Vorderrad (12), das an dem lenkbaren Element (30) montiert und in einer Ansicht parallel zum Boden, auf das Fahrrad herabblickend, konfiguriert ist zum Bewegen von: i) einer Position, in der die Drehachse des Vorderrads im Wesentlichen mit der zweiten Achse (34a) ausgerichtet zu sein scheint, wenn der vordere Schaft auf einer Seite des Hauptschafts positioniert ist; zu ii) einer Position, in der die Drehachse des Vorderrads im Wesentlichen senkrecht zur zweiten Achse ist, wenn das lenkbare Element um die erste Scharnierachse (54c, 54l) herum gedreht wird.

6. Faltrad (1), das einen Rahmen (10) nach einem der Ansprüche 1 bis 2 umfasst, oder Faltrad nach Anspruch 5, wenn nicht von Anspruch 3 oder 4 abhängig, wobei das erste oder zweite Scharniergelenk (48, 54) ein erstes Rahmenelement (36) des Rahmens, ein zweites Rahmenelement (26, 30) des Rahmens, ein Scharnier (48, 54), das das erste und zweite Rahmenelement verbindet, um eine Bewegung des ersten und/oder zweiten Rahmenelements zwischen einer ersten offenen Scharnierposition und einer zweiten geschlossenen Scharnierposition in Bezug zueinander zu ermöglichen, und eine Klemme (50a) umfasst, wobei die Klemme konfiguriert ist, um das erste und/oder zweite Rahmenelement in der ersten und/oder zweiten Position zurückzuhalten, wobei das erste oder zweite Scharniergelenk ferner einen verschleißfesten Gegenstand umfasst, der in das erste und/oder zweite Rahmenelement integriert ist, wobei mindestens ein Abschnitt des verschleißfesten Gegenstands konfiguriert ist, um in zugewandtem Kontakt mit einem Abschnitt der Klemme zu stehen, wenn sich das erste und/oder zweite Rahmenelement in der zweiten geschlossenen Scharnierposition in Bezug auf das erste Rahmenelement befindet.

7. Faltrad (1) nach Anspruch 6, wobei der verschleißfeste Gegenstand höhere Verschleißfestigkeitseigenschaften als das erste und/oder zweite Rahmenelement aufweist.

8. Faltrad (1), das einen Rahmen (10) nach einem der Ansprüche 1 bis 4 umfasst, oder Faltrad nach einem der Ansprüche 5 bis 7, ferner umfassend einen Aufhängungsgegenstand (58) für ein Fahrrad, wobei der Aufhängungsgegenstand ein erstes Ende (58a), das konfiguriert ist, um an einem ersten Rahmenabschnitt (40) des Rahmens montiert zu werden, und ein zweites Ende (58b), das konfiguriert ist, um an einem zweiten Rahmenabschnitt (38) des Rahmens montiert zu werden, umfasst, wobei mehrere in Längsrichtung beabstandete elastische Scheiben (58d) zwischen dem ersten und zweiten Ende des Aufhängungsgegenstands vorgesehen sind, und jede elastische Scheibe durch mindestens eine massive Scheibe (58c) so getrennt ist, dass, wenn das Fahrrad einem ersten Belastungszustand ausgesetzt ist, der Abstand zwischen den massiven Scheiben aufrechterhalten wird, und wenn das Fahrrad einem zweiten Belastungszustand ausgesetzt wird, der größer als der erste Belastungszustand ist, der Abstand zwischen den massiven Scheiben durch Verformung der mehreren elastischen Scheiben verringert wird.

9. Faltrad (1) nach Anspruch 8, wobei jede der mehreren massiven Scheiben (58c) einen ringförmigen Endanschlag umfasst, an dem eine elastische Scheibe (53d) so anliegt, dass der ringförmige Endanschlag von benachbarten massiven Scheiben eine endliche Distanz bereitstellt, die der Abstand zwischen benachbarten massiven Scheiben dadurch verringert werden kann, wenn das Fahrrad dem zweiten Belastungszustand ausgesetzt ist.

10. Faltrad (1) nach Anspruch 8 oder Anspruch 9, wobei jede der mehreren elastischen Scheiben (58d) und massiven Scheiben (58c) zwischen dem ersten Rahmenabschnitt (40) und dem zweiten Rahmenabschnitt (38) geklemmt ist.

11. Faltrad (1), das einen Rahmen (1) nach einem der Ansprüche 1 bis 4 umfasst, oder Faltrad nach einem der Ansprüche 5 bis 10, wobei der Rahmen ferner einen hinteren Schaft (40), der eine sich im Wesentlichen senkrecht zur Längsachse (34a) des Hauptschafts (34) erstreckende Achse definiert, und einen Hinterradträger (38), der sich von der Hinterwelle nach hinten erstreckt, umfasst; wobei ein Lagergehäuse der Tretkurbel (24) an einem unteren Ende des hinteren Schafts vorgesehen ist und ein Aufhängungsmechanismus (58) zwischen dem hinteren Schaft und dem Hinterradträger neben dem Tretkurbellagergehäuse vorgesehen ist.

12. Faltrad (1), das einen Rahmen (10) nach einem der Ansprüche 1 bis 2 umfasst, oder Faltrad nach einem von Anspruch 5, wenn von Anspruch 1 und 2 abhängig, oder den Ansprüchen 8 bis 11, wenn von keinem der Ansprüche 3, 4, 6 und 7 abhängig, wobei das erste oder zweite Scharniergelenk (48, 54) ein erstes Rahmenelement (36) des Rahmens, ein zweites Rahmenelement (26, 30) des Rahmens, ein Scharnier (48, 54), das das erste und zweite Rahmenelement verbindet, um zu ermöglichen, dass sich das erste und/oder zweite Rahmenelement zwischen einer offenen Position und einer geschlossenen Position relativ zueinander bewegen, und eine Klemme (50a) umfasst, wobei die Klemme ein Teil des ersten Rahmenelements ist und konfiguriert ist, um das erste und/oder zweite Rahmenelement selektiv in der geschlossenen Position zurückzuhalten, wobei das erste oder zweite Scharniergelenk ferner einen Hohlraum (54i) zum Aufnehmen eines Abschnitts der Klemme umfasst, wenn sich das erste oder zweite Scharniergelenk in der geschlossenen Position befindet, wobei der Hohlraum ein Teil des zweiten Rahmenelements ist und konfiguriert ist, um das erste oder zweite Scharniergelenk in der geschlossenen Position zurückzuhalten.

13. Faltrad (1), das einen Rahmen (10) nach einem der Ansprüche 1 bis 2 umfasst, oder Faltrad nach einem von Anspruch 5, wenn von den Ansprüchen 1 oder 2 abhängig, oder den Ansprüchen 8 bis 11, wenn von keinem der Ansprüche 3, 4, 6 und 7 abhängig, ferner umfassend einen Drehmomentbegrenzer (100) für eine an dem Faltrad verwendete Klemme (50a), wobei der Drehmomentbegrenzer ein Kugellager (102) in Kontakt mit einem Zahnrad (104), das die Klemmschraube (50e) enthält, und ein elastisches Element umfasst, das das Kugellager in Eingriff mit dem Zahnrad vorspannt, wobei bei Anlegen eines einen Schwellenwert überschreitenden Drehmoments an den Klemmbetätiger die Vorspannkraft des elastischen Elements überwunden wird und das Kugellager außer Eingriff mit dem Zahnrad getrieben wird.

14. Faltrad (1), das einen Rahmen (10) nach einem der Ansprüche
1 bis 2 umfasst, oder Faltrad nach einem von Anspruch 5, wenn von den Ansprüchen 1 oder 2 abhängig, oder den Ansprüchen 8 bis 11, wenn von keinem der Ansprüche 3, 4, 6 und 7 abhängig, ferner umfassend einen Drehmomentbegrenzer (200) für eine an dem Faltrad verwendete Klemme (50a), wobei der Drehmomentbegrenzer ein Klemmbetätiger (50d) mit einem Zahnrad (202) in Eingriff mit einem anderen, die Klemmschraube enthaltenden Zahnrad (204) umfasst, das auf mehreren Federn (206) platziert ist, wobei bei Anlegen eines einen Schwellenwert überschreitenden Drehmoments an den Klemmbetätiger die Vorspannkraft der mehreren Federn überwunden wird und die Zahnräder außer Eingriff bewegt werden.

## Revendications

1. Cadre (10) pour une bicyclette pliable (1), le cadre comprenant : un arbre avant (36) possédant une première partie d'extrémité (36b) pour le raccordement à un élément de direction (26) et une seconde partie d'extrémité (36c) pour le raccordement à un élément orientable (30), l'arbre avant définissant un premier axe (36a) et l'élément orientable définissant un axe de rotation pour une roue avant (12) ; et, un arbre principal (34) destiné à fournir un raccordement entre l'arbre avant et une partie arrière du cadre et s'étendant globalement vers l'arrière en s'éloignant de l'arbre avant, l'arbre principal définissant un deuxième axe longitudinal (34a) s'étendant globalement vers l'arrière en s'éloignant de l'arbre avant; et un troisième axe (44a) à travers un arbre de raccordement (44) conçu pour être espacé du premier axe et parallèle à celui-ci et autour duquel l'arbre avant est monté rotatif ; un premier joint articulé (54) raccordant l'arbre avant et l'élément orientable et définissant un premier axe d'articulation (54c, 541) conçu pour être incliné par rapport à un plan (54k) défini perpendiculairement au premier axe lorsqu'il est vu depuis l'avant du cadre ; et lorsque le cadre est dans une configuration dépliée, ledit arbre avant, lesdits éléments de direction et orientables étant sensiblement alignés axialement là où les éléments de direction et orientables se raccordent à l'arbre avant, et étant positionnés en avant de l'arbre principal, et ledit arbre avant étant autorisé à tourner autour du troisième axe (44a), afin que l'élément de direction (26) tourne autour du cadre, et lorsque le cadre est déplacé vers une configuration repliée : i) ledit arbre avant étant tourné autour du troisième axe pour positionner l'élément orientable d'un côté de l'arbre principal ; et ii) ledit élément orientable étant tourné autour du premier axe d'articulation (54c, 541) défini par le premier joint articulé (54) de sorte que l'élément orientable soit déplacé d'abord vers l'extérieur et ensuite vers l'arrière par rapport à l'arbre avant et ledit axe de rotation pour une roue avant étant déplacé d'une première orientation angulaire par rapport au deuxième axe vers une seconde orientation angulaire par rapport au deuxième axe.

2. Cadre (10) pour une bicyclette pliable (1) selon la revendication 1, comprenant en outre un second joint articulé (48) qui raccorde l'arbre avant (36) et l'élément de direction (26) ; ledit élément de direction étant conçu pour tourner autour d'un deuxième axe d'articulation (48c) défini par le second joint articulé qui est sensiblement perpendiculaire au premier axe (36a) pour déplacer l'élément de direction par rapport à l'arbre avant à partir d'une configuration dépliée vers une configuration pliée.

3. Cadre (10) pour une bicyclette pliable (1) selon une quelconque revendication précédente, ledit premier joint articulé (54) et/ou ledit second joint articulé (48) comprenant en outre un dispositif de serrage (50a) conçu pour permettre ou empêcher sélectivement la séparation de la première partie du premier et/ou du second joint articulé et de la seconde partie du premier et/ou du second joint articulé.

4. Cadre (10) pour une bicyclette pliable (1) selon la revendication 3, ledit dispositif de serrage (50a) comprenant un élément de serrage possédant une première partie de mise en prise (50b) et une seconde partie de mise en prise (50c) et un actionneur de dispositif de serrage (50d) ; et ladite première partie de mise en prise étant conçue pour se mettre en prise avec la première partie du premier et/ou du second joint articulé (48, 54) et ladite seconde partie de mise en prise étant conçue pour se mettre en prise avec la seconde partie du premier et/ou du second joint articulé ; et ledit actionneur de dispositif de serrage comprenant un limiteur de couple.

5. Bicyclette pliable (1) comprenant le cadre (10) des revendications 1 à 4 et comprenant en outre une roue avant (12) montée sur l'élément orientable (30) et, dans une vue parallèle au sol regardant vers le bas sur la bicyclette, conçue pour se déplacer à partir de : i) une position dans laquelle l'axe de rotation de la roue avant semble être sensiblement aligné avec le deuxième axe (34a) lorsque l'arbre avant est positionné d'un côté de l'arbre principal ; à ii) une position dans laquelle l'axe de rotation de la roue avant est sensiblement perpendiculaire au deuxième axe lorsque l'élément orientable est tourné autour du premier axe d'articulation (54c, 541).

6. Bicyclette pliable (1) comprenant un cadre (10) selon l'une quelconque des revendications 1 à 2 ou bicyclette pliable selon la revendication 5 lorsqu'elle ne dépend pas de la revendication 3 ou 4, le premier ou le second joint articulé (48, 54) comprenant un premier élément de cadre (36) du cadre, un second élément de cadre (26, 30) du cadre, une articulation (48, 54) raccordant les premier et second éléments de cadre pour permettre aux premier et/ou second éléments de cadre de se déplacer entre une première position d'articulation ouverte et une seconde position d'articulation fermée l'une par rapport à l'autre, et un dispositif de serrage (50a), ledit dispositif de serrage étant conçu pour retenir le premier et/ou le second élément de cadre dans la première et/ou la seconde position, le premier ou le second joint articulé comprenant en outre un article résistant à l'usure intégré dans le premier et/ou le second élément de cadre, au moins une partie de l'article résistant à l'usure est conçue pour être en contact face à face avec une partie du dispositif de serrage lorsque le premier et/ou le second élément de cadre est dans la seconde position d'articulation fermée par rapport au premier élément de cadre.

7. Bicyclette pliable (1) selon la revendication 6, ledit article résistant à l'usure possédant des propriétés de résistance à l'usure supérieures à celles des premier et/ou second éléments de cadre.

8. Bicyclette pliable (1) comprenant un cadre (10) selon l'une quelconque des revendications 1 à 4 ou une bicyclette pliable selon l'une quelconque des revendications 5 à 7, comprenant en outre un article de suspension (58) pour une bicyclette, l'article de suspension comprenant une première extrémité (58a) conçue pour être montée sur une première partie de cadre (40) du cadre et une seconde extrémité (58b) conçue pour être montée sur une seconde partie de cadre (38) du cadre, une pluralité de disques élastiques longitudinalement espacés (58d) étant disposés entre la première et la seconde extrémité de l'article de suspension, et chaque disque élastique étant séparé par au moins un disque solide (58c) de sorte que lorsque la bicyclette est soumise à un premier état de charge, l'espacement entre les disques pleins soit maintenu et lorsque la bicyclette est soumise à un second état de charge, supérieur au premier état de charge, l'espacement entre les disques solides soit réduit par déformation de la pluralité de disques élastiques.

9. Bicyclette pliable (1) selon la revendication 8, chacun de la pluralité de disques solides (58c) comprenant une butée annulaire contre laquelle un disque élastique (53d) vient en butée de sorte que la butée annulaire des disques solides adjacents fournisse une distance finie que l'espacement entre des disques pleins adjacents puisse être réduit lorsque la bicyclette est soumise au second état de charge.

10. Bicyclette pliable (1) selon la revendication 8 ou la revendication 9, chacun de la pluralité de disques élastiques (58d) et de disques solides (58c) étant serré entre la première partie de cadre (40) et la seconde partie de cadre (38).

11. Bicyclette pliable (1) comprenant un cadre (1) selon l'une quelconque des revendications 1 à 4 ou bicyclette pliable selon l'une quelconque des revendications 5 à 10, le cadre comprenant en outre un arbre arrière (40) définissant un axe s'étendant sensiblement perpendiculaire à l'axe longitudinal (34a) de l'arbre principal (34) et un support de roue arrière (38) s'étendant vers l'arrière à partir de l'arbre arrière ; un logement de palier de manivelle de pédalier (24) étant prévu au niveau d'une extrémité inférieure de l'arbre arrière et un mécanisme de suspension (58) étant prévu entre l'arbre arrière et le support de roue arrière adjacent au logement de palier de manivelle de pédalier.

12. Bicyclette pliable (1) comprenant un cadre (10) selon l'une quelconque des revendications 1 à 2 ou bicyclette pliable selon l'une quelconque de la revendication 5 lorsqu'elle dépend des revendications 1 et 2, ou des revendications 8 à 11 lorsqu'elles ne dépendent pas de l'une quelconque des revendications 3, 4, 6 et 7, le premier ou le second joint articulé (48, 54) comprenant un premier élément de cadre (36) du cadre, un second élément de cadre (26, 30) du cadre, une articulation (48, 54) raccordant les premier et second éléments de cadre pour permettre aux premier et/ou second éléments de cadre de se déplacer entre une position ouverte et une position fermée l'un par rapport à l'autre, et un dispositif de serrage (50a), ledit dispositif de serrage faisant partie du premier élément de cadre et étant conçu pour retenir sélectivement le premier et/ou le second élément de cadre dans la position fermée, le premier ou le second joint articulé comprenant en outre un creux (54i) destiné à recevoir une partie du dispositif de serrage lorsque le premier ou le second joint articulé est dans la position fermée, ledit creux faisant partie du second élément de cadre et conçu pour retenir le premier ou second joint articulé dans la position fermée.

13. Bicyclette pliable (1) comprenant un cadre (10) selon l'une quelconque des revendications 1 à 2 ou bicyclette pliable selon l'une quelconque de la revendication 5 lorsqu'elle dépend des revendications 1 ou 2, ou des revendications 8 à 11 lorsqu'elles ne dépendent pas de l'une quelconque des revendications 3, 4, 6 et 7, comprenant en outre un limiteur de couple (100) pour un dispositif de serrage (50a) utilisé sur la bicyclette pliable, le limiteur de couple comprenant un roulement à billes (102) en contact avec une roue dentée (104) contenant le boulon de dispositif de serrage (50e) et un élément élastique sollicitant le roulement à billes en prise avec la roue dentée, lorsqu'un couple dépassant un seuil est appliqué à l'actionneur de dispositif de serrage, ladite force de sollicitation de l'élément élastique étant surmontée et ledit roulement à billes étant poussé à se séparer de la roue dentée.

14. Bicyclette pliable (1) comprenant un cadre (10) selon l'une quelconque des revendications 1 à 2 ou bicyclette pliable selon l'une quelconque de la revendication 5 lorsqu'elle dépend des revendications 1 ou 2, ou des revendications 8 à 11 lorsqu'elles ne dépendent pas de l'une quelconque des revendications 3, 4, 6 et 7, comprenant en outre un limiteur de couple (200) pour un dispositif de serrage (50a) utilisé sur la bicyclette pliable, le limiteur de couple comprenant un actionneur de dispositif de serrage (50d) avec une roue dentée (202) en prise avec une autre roue dentée (204) contenant le boulon de dispositif de serrage, placé sur une pluralité de ressorts (206), lorsqu'un couple dépassant un seuil est appliqué à l'actionneur de dispositif de serrage, ladite force de sollicitation de la pluralité de ressorts étant surmontée et lesdites roues dentées étant déplacées pour se séparer.
